# FASCICULE DE BREVET EUROPEEN

(11) **EP 4 010 575 B1**
(45) Date de publication et mention de la délivrance du brevet: **07.01.2026**
(21) Numéro de dépôt: 20757648.9
(22) Date de dépôt: 04.08.2020
(51) Int. Cl.: F02K 1/62, F02K 1/70, F02K 1/76, F01D 21/00

(54) **CAPTEUR DE POSITION POUR PORTE D'INVERSEUR DE POUSSÉE DE NACELLE D'AÉRONEF**
POSITIONSSENSOR FÜR EINE SCHUBUMKEHRKLAPPE EINER FLUGZEUGGONDEL
POSITION SENSOR FOR AIRCRAFT NACELLE THRUST REVERSER DOOR

(30) Priorité: 07.08.2019 FR 1909044
(43) Date de publication de la demande: 15.06.2022
(73) Titulaire: Safran Nacelles, 76700 Gonfreville l'Orcher (FR)
(72) Inventeur: LONCLE, Alexis, 77550 Moissy Cramayel (FR); VALLEROY, Laurent Georges, 77550 Moissy Cramayel (FR)
(74) Mandataire: Germain Maureau
(86) Numéro de dépôt international: PCT/FR2020/051435
(87) Numéro de publication internationale: WO 2021/023947

(56) Documents cités:
- FR-A1- 3 059 646
- US-A- 5 826 823
- US-A1- 2019 120 173

## Description

La présente invention concerne un capteur de position pour porte d'inverseur de poussée de nacelle d'aéronef.

Un aéronef est propulsé par un ou plusieurs ensembles propulsifs comprenant chacun un turboréacteur logé dans une nacelle tubulaire. Chaque ensemble propulsif est rattaché à l'aéronef par un mât situé généralement sous ou sur une aile ou au niveau du fuselage de l'aéronef.

Une nacelle présente généralement une structure tubulaire comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

Les moyens d'inversion de poussée sont, lors de l'atterrissage de l'aéronef, destinés à améliorer la capacité de freinage de celui-ci en redirigeant vers l'avant au moins une partie de la poussée générée par le turboréacteur. Ces moyens comprennent un inverseur de poussée comprenant des éléments mobiles d'inversion de poussée, généralement deux éléments mobiles d'inversion de poussée, portés par la nacelle pour se déplacer entre une position de fermeture (jet direct) dans laquelle l'inverseur de poussée est inactif, et une position d'ouverture (jet inversé) dans laquelle l'inverseur de poussée est actif, c'est-à-dire qu'il renvoie au moins une partie du flux de gaz généré par le turboréacteur dans la direction inverse au flux guidé par la nacelle. La section aval d'une nacelle comprend donc une structure fixe et une structure mobile.

Dans un type d'inversion de poussée, les éléments mobiles d'inversion sont des portes. Dans un autre type d'inversion de poussée, les éléments mobiles d'inversion sont des grilles.

La présente demande de brevet concerne les inverseurs de poussée à porte.

L'actionnement des portes d'inverseurs de poussée est généralement réalisé grâce à des actionneurs montés sur la nacelle et reliés d'une part à un moteur, et d'autre part aux portes pour manœuvrer celles-ci dans un sens de rétraction ou de déploiement sur une course des actionneurs comprise entre la position de fermeture et la position d'ouverture des portes.

Il est connu en outre de prévoir un système de verrouillage des portes en position de fermeture, afin de supprimer tout risque d'ouverture intempestive des portes. Usuellement, les systèmes de verrouillages comportent des verrous sous forme de crochets commandés par une unité de commande reliée à des capteurs de position des portes, destinés à fournir à l'unité de commande les informations nécessaires au bon fonctionnement du système de verrouillage, en ce qui concerne la position des portes.

Un type de capteur de position des portes, nommé prox sensor, comprend des éléments de détection qui sont :
- un détecteur solidaire de la structure fixe de la nacelle, et
- une cible solidaire de la porte.

Le détecteur peut être un détecteur magnétique émettant un champ magnétique, auquel cas la cible est adaptée pour changer l'état de ce champ magnétique lorsqu'elle se trouve sensiblement en vis-à-vis du détecteur. En variante, le détecteur est un détecteur optique émettant un flux lumineux par exemple par l'intermédiaire d'un ensemble de diodes ou de lasers, auquel cas la cible comporte un moyen de réflexion du flux lumineux, tel qu'un miroir, adapté pour réfléchir le flux lumineux émis par le détecteur lorsque la cible se trouve sensiblement en vis-à-vis du détecteur. Dans une autre variante, le détecteur est un détecteur électromagnétique comprenant un levier de contact, qui peut être actionné par la cible lorsque la cible se trouve sensiblement en vis-à-vis du détecteur.

La capacité de détection de ces capteurs connus se trouve dans une plage très faible. En effet, ils sont capables de détecter une cible disposée généralement à une distance de 5 mm maximum. Il est donc nécessaire que les tolérances entre la porte et la structure fixe, et plus particulièrement la tolérance entre le détecteur positionné sur la structure fixe et la cible positionnée sur la porte, soient faibles, c'est-à-dire de l'ordre de 5 mm. Ainsi, afin de garantir le bon fonctionnement de tels capteurs de position, les éléments de détection (détecteur et cible) doivent être calés par des cales de réglage, et des dispositifs de recentrage de la porte (nommés spigots) doivent être disposés sur la structure fixe. Ces dispositifs de recentrage doivent avoir des jeux faibles (de l'ordre de 1 mm) pour limiter les déplacements relatifs de la porte, ce qui engendre des efforts importants aux interfaces, notamment au niveau des spigots.

US 5 826 823 A divulgue une nacelle pour turboréacteur d'aéronef. La nacelle comprend une structure fixe et un inverseur de poussée. L'inverseur de poussée comprend une structure fixe et des portes mobiles en rotation. La nacelle comprend au moins un capteur de position d'une des portes. Le capteur comporte une cible destinée à être détectée; un détecteur configuré pour détecter la cible lorsqu'elle entre dans sa plage de détection; et un guide (sous forme de l'articulation d'un cylindre sur lequel la cible est montée) configuré pour guider la cible pour la positionner dans la plage de détection du détecteur. La nacelle comporte un système de verrouillage des portes en position de fermeture, et le détecteur et le guide sont montés sur la structure fixe de l'inverseur de poussée.

En outre, ces contraintes nécessitent de nombreuses opération de réglage lors du changement de porte.

Afin de pallier à ces inconvénients, il est connu d'utiliser des capteurs de type électromécanique comprenant un levier de contact, qui peut être actionné par la cible lorsque la cible vient déplacer le levier. Ces capteurs sont nommés stow switch.

Cependant ces types de capteurs sont lourds. En outre, leur mécanisme en mouvement est sensible à l'usure.

La présente invention vise à résoudre les inconvénients rencontrés avec les capteurs de position des portes de l'art antérieur, en proposant un capteur léger, et qui permet de simplifier la conception de l'inverseur en réduisant les contraintes à respecter.

La présente invention concerne pour ce faire une nacelle pour turboréacteur d'aéronef selon la revendication 1 qui comprend entre autres un capteur de position d'une porte d'inverseur de poussée de la nacelle comportant :
- Une cible destinée à être détectée,
- Un détecteur présentant une plage de détection et comportant une tête de détection configurée pour détecter la cible lorsqu'elle entre dans sa plage de détection, et
- Un guide de la cible configuré pour guider la cible pour la positionner dans la plage de détection du détecteur,
Dans lequel le détecteur est fixe par rapport au guide de la cible.

Ainsi, la cible est apte à rentrer dans la plage de capacité de détection du capteur, sans nécessiter de cale de réglage, d'intervention de maintenance ou d'usinage très précis des portes et de la structure fixe. Le capteur de position permet de détecter la porte en position de fermeture.

Le capteur de la nacelle selon l'invention permet d'ajuster les dispersions dimensionnelles et dues au fonctionnement d'un inverseur de poussée, en guidant le cible dans la plage de détection du détecteur, et en lui conférant un débattement dans cette plage de détection.

En outre, un tel capteur de position permet un gain en masse et en coût de fabrication, et permet de réduire les risques d'erreur de détection.

Par ailleurs, le guide permet de protéger la cible. Il fait office de carénage protecteur.

Le guide est configuré pour recevoir la cible pour la positionner dans la plage de détection du détecteur.

Selon d'autres caractéristiques de l'invention, la nacelle de l'invention comporte l'une ou plusieurs des caractéristiques optionnelles suivantes.

Selon une caractéristique, le détecteur est monté sur le guide de la cible.

Selon une caractéristique, la cible est destinée à être positionnés sur la porte dont on cherche à détecter la position, et le détecteur et le guide de la cible sont destinés à être positionnés sur la structure fixe de l'inverseur de poussée.

Selon cette caractéristique, le guide comprend une ouverture dans laquelle est introduite la tête de détection du détecteur de sorte à permettre la détection de la cible insérée dans le guide.

Selon une caractéristique, la cible est configurée pour se situer à une distance entre 0 et 5 mm, et de préférence de l'ordre de 5 mm, de la tête de détection du détecteur, lorsque la cible est insérée dans le guide.

Le guide permet de positionner la cible à une telle distance. Le guide est configuré pour positionner la cible à une distance prédéterminée de la tête de détection.

Selon une caractéristique, le capteur de position est conçu pour envoyer un signal à un dispositif externe lorsque la cible se trouve dans la plage de détection du détecteur.

Selon une caractéristique, le capteur de position est un capteur magnétique.

Selon cette caractéristique, la cible est adaptée pour changer l'état de ce champ magnétique lorsqu'elle se trouve dans la plage de détection du détecteur.

Selon cette caractéristique, la cible comporte au moins une partie en matériau métallique magnétique tel que l'inox magnétique ou l'acier inoxydable martensitique et plus particulièrement le 15-5 PH, ladite partie étant configurée pour être dans la plage de détection du détecteur lorsque la cible est insérée dans le guide, et le guide est en matériau non magnétique, tel qu'un matériau organique ou en polytétrafluoroéthylène (PTFE).

Selon une caractéristique, le capteur de position est un capteur optique.

Selon cette caractéristique, le capteur de position émet un flux lumineux par exemple par l'intermédiaire d'un ensemble de diodes ou de lasers, et la cible comporte un moyen de réflexion du flux lumineux, tel qu'un miroir, adapté pour réfléchir le flux lumineux émis par le détecteur lorsque la cible se trouve dans la plage de détection du détecteur

Selon une caractéristique, le capteur de position est un capteur électromécanique.

Selon cette caractéristique, le capteur de position comprend un levier de contact, qui peut être actionné par la cible lorsque la cible se trouve dans la plage de détection du détecteur.

Selon une caractéristique, le guide est en matériau non magnétique, tel qu'un matériau organique ou en polytétrafluoroéthylène (PTFE).

Selon une caractéristique, la cible est en forme de lame souple.

La souplesse de la lame permet l'introduction de la lame dans la guide sans engendrer d'effort. Ainsi le capteur de position selon l'invention est simple et passif, et permet de positionner la cible dans la plage de détection du détecteur.

Selon une caractéristique, la cible présente une épaisseur de l'ordre de 2 mm.

Cette épaisseur permet de lui conférer la souplesse nécessaire à son introduction dans le guide.

Selon une caractéristique, la cible présente une épaisseur variable, l'épaisseur étant de l'ordre de 2 mm au de niveau la plage de détection du détecteur lorsque la cible est insérée dans le guide.

Selon une caractéristique, la cible comporte une portion élastique permettant de lui conférer la souplesse nécessaire à son introduction dans le guide.

Selon une caractéristique, le guide présente une rainure dans laquelle la lame est apte à être insérée.

La rainure est disposée à une distance connue de la tête de détection, afin de positionner la cible dans la plage de détection du détecteur.

Selon une caractéristique, la rainure présente des bords d'attaques arrondis permettant de guider l'introduction de la lame.

Selon une caractéristique, les parois de la rainure sont en matériau à très faible adhérence de sorte à limiter les frictions avec la lame et ainsi limiter l'usure de la lame ou du guide. Ces matériaux sont par exemple le polytétrafluoroéthylène (PTFE), le polyamide (PA66), le polyetheretherketone (PEEK tribo).

Selon une caractéristique, la rainure est sensiblement conique, la plus grande dimension étant disposée à l'extrémité d'introduction de la cible.

La longueur de la lame est limitée afin que celle-ci se retrouve en dehors du champ du détecteur lorsque la porte n'est pas en position de fermeture. Ainsi, le capteur de position est apte à détecter la rupture d'un élément de rétention de la porte en position de fermeture, tel qu'un système de verrouillage.

Selon l'invention, la nacelle comporte un système de verrouillage de la porte en position de fermeture comprenant un crochet de porte disposé sur la porte, destiné à coopérer avec un crochet fixe disposé sur la structure fixe de l'inverseur de poussée, et la cible est fixée sur le crochet de porte.

Ainsi, la cible est disposée au plus proche du crochet, ce qui permet d'améliorer la sensibilité de la détection de la fermeture de la porte, et la sensibilité de la détection de la rupture du crochet.

D'autres caractéristiques et avantages de la présente invention apparaitront à la lecture de la description qui va suivre et à l'examen des figures annexées dans lesquelles :
[Fig. 1] La figure 1 est une vue schématique en perspective d'un inverseur de poussée d'une nacelle de turboréacteur d'aéronef en position de fermeture.
[Fig. 2] La figure 2 est une vue schématique en perspective de l'inverseur de poussée de la figure 1 en position d'ouverture, permettant de visualiser une partie du capteur selon l'invention.
[Fig. 3] La figure 3 est une vue schématique en perspective d'une zone de la figure 2.
[Fig. 4] La figure 4 est une vue schématique en perspective d'un capteur de position d'une porte de l'inverseur de poussée de la figure 1, le capteur de position comportant une cible et un guide, le guide étant partiellement représentée pour faciliter la visualisation de la cible.
[Fig. 5] La figure 5 est une vue schématique en coupe du capteur de position selon l'invention.
[Fig. 6] La figure 6 est une vue schématique en perspective du guide du capteur de position selon l'invention.

Dans la description qui va suivre et dans les revendications, des composants identiques, similaires ou analogues seront désignés par les mêmes chiffres de référence.

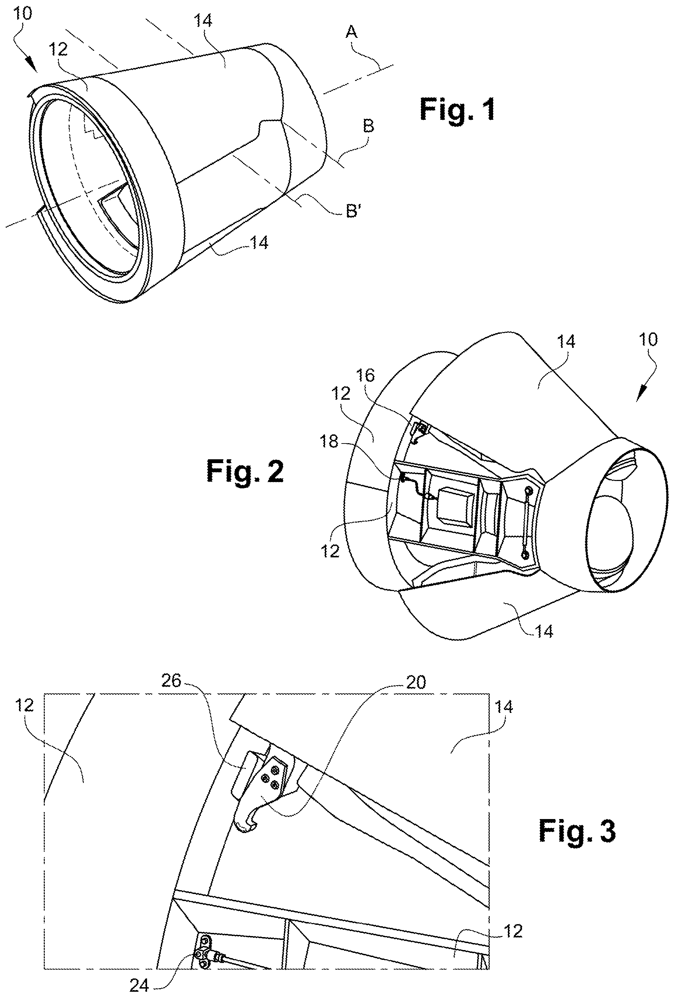

La figure 1 illustre un inverseur de poussée 10 d'une nacelle de turboréacteur d'aéronef.

L'inverseur de poussée 10 présente un axe longitudinal A correspondant à un axe longitudinal de la nacelle (non représentée). Il comporte une structure fixe 12 et deux portes 14 en position de fermeture dans laquelle elles assurent une continuité aérodynamique avec la structure fixe 12 de l'inverseur et avec la nacelle (non représentée). Les portes sont mobiles en rotation autour d'un axe transversal B, B' à l'axe longitudinal A, entre la position de fermeture et une position d'ouverture (figure 2) dans laquelle elles ouvrent un passage destiné à la circulation d'un flux d'air secondaire dévié.

L'inverseur de poussée 10 comporte en outre un système de verrouillage 16 de chaque porte 14 en position de fermeture et un capteur 18 de position de chaque porte 14, comme il sera vu au regard de la figure 2.

La figure 2 illustre l'inverseur de poussée 10 de la figure 1 en position d'ouverture et permettant de visualiser une partie du système de verrouillage 16 et du capteur 18 de position d'une porte 14.

La figure 3 illustre plus en détail le système de verrouillage 16 et le capteur 18 tels que représentés à la figure 2.

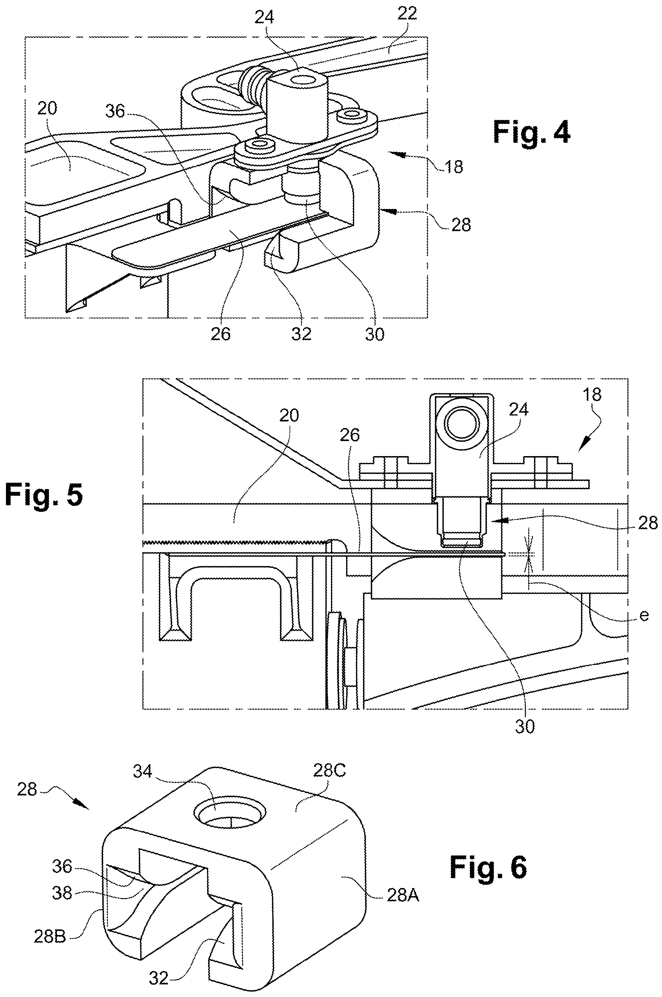

Le système de verrouillage 16 comprend un crochet de porte 20 disposé sur la porte 14, destiné à coopérer avec un crochet fixe 22 (figure 4) disposé sur la structure fixe 12 de l'inverseur de poussée, mais non visible sur la figure 3.

Le capteur 18 de position est un capteur magnétique. Il comporte un détecteur 24 fixé à la structure fixe 12 de l'inverseur, une lame 26 souple fixée au crochet de porte 20, et un guide 28 (figure 4) pour la lame 26, destiné à guider la lame pour la positionner dans la plage de détection du détecteur 24 lorsque la porte 14 est en position de fermeture.

La lame 26 est matériau métallique magnétique tandis que le guide 28 (figure 4) est en matériau organique.

Les figures 4 et 5 illustrent plus en détail le capteur 18 de position, la lame 26 étant en position insérée dans le guide 28.

Le détecteur 24 comporte une tête de détection 30 configurée pour détecter la lame 26 lorsqu'elle entre dans sa plage de détection, c'est-à-dire lorsqu'elle est positionnée dans le guide en vis-à-vis de la tête de détection 30 et à une distance de l'ordre de 5 mm maximum de la tête de détection.

Le capteur de position est conçu pour envoyer un signal à un dispositif externe (non représenté) lorsque la lame 26 est détectée par le détecteur 24.

La lame 26 est une cible du détecteur 24. Elle présente une épaisseur « e » de 2 mm.

Le guide 28 est représenté partiellement afin de faciliter la visualisation du détecteur 24. Il est fixé à la structure fixe 12 de l'inverseur via le détecteur 24. Il présente une forme de U et comporte une rainure 32 dans chacune de ses deux branches 28A, 28B (figure 6) parallèles, dans lesquelles la lame 26 est destinée à être insérée.

Plus particulièrement, le détecteur 24 est monté sur le guide 28, et le guide 28 comporte une ouverture 34 (figure 6) dans laquelle est introduite la tête de détection 30 de sorte que la tête de détection 30 soit en vis-à-vis de la rainure 32 pour pouvoir détecter la lame 26 lorsqu'elle est positionnée dans la rainure 32. La distance entre la rainure 32 et la tête de détection 30 est de 3 mm.

La rainure 32 présente des bords d'attaque 36 arrondis afin de guider l'introduction de la lame dans la rainure 32. En outre, ses parois internes 38 (figure 6) sont en matériau à très faible adhérence de sorte à limiter les frictions avec la lame 26.

La figure 6 représente le guide 28 du capteur 18 selon l'invention.

Comme indiqué au regard des figures 4 et 5, le guide 28 est un bloc en forme de U comportant des rainures 32 dans chacune de ses branches parallèles 28A, 28B. Chaque rainure 32 présente des bords d'attaque 36 arrondis afin de guider l'introduction de la lame dans des rainures 32. En outre, les parois internes 38 de chaque rainure 32 sont en matériau à très faible adhérence de sorte à limiter les frictions avec la lame.

Le guide 28 comporte en outre une ouverture 34 dans sa base 28C, afin de permettre d'introduire la tête de détection 30 du détecteur 24 (figures 4 et 5).

## Revendications

1. Nacelle pour turboréacteur d'aéronef, la nacelle présentant un axe longitudinal (A) et comprenant une structure fixe et un inverseur de poussée (10), l'inverseur de poussée comprenant :
- une structure fixe (12), et
- au moins une porte (14), mobile en rotation autour d'un axe transversal (B) à l'axe longitudinal de la nacelle, entre une position de fermeture dans laquelle elle assure une continuité aérodynamique avec la structure fixe de la nacelle lors d'un fonctionnement de la nacelle en jet direct et une position d'ouverture dans laquelle elle ouvre un passage destiné à la circulation d'un flux d'air secondaire dévié lors d'un fonctionnement de la nacelle en jet inversé, ladite nacelle comprenant au moins un capteur (18) de position de la porte (14) d'inverseur de poussée (10), le capteur (18) comportant :
- une cible (26) destinée à être détectée ;
- un détecteur (24) présentant une plage de détection et comportant une tête de détection (30) configurée pour détecter la cible lorsqu'elle entre dans sa plage de détection ; et
- un guide (28) de la cible configuré pour guider la cible pour la positionner dans la plage de détection du détecteur,
le détecteur étant fixe par rapport au guide de la cible,
la nacelle comportant un système de verrouillage (20, 22) de la porte en position de fermeture comprenant un crochet de porte (20) disposé sur la porte, destiné à coopérer avec un crochet fixe (22) disposé sur la structure fixe de l'inverseur de poussée, la cible étant fixée sur le crochet de porte, et le détecteur et le guide étant montés sur la structure fixe de l'inverseur de poussée.

2. Nacelle selon la revendication précédente, dans laquelle le détecteur est monté sur le guide de la cible.

3. Nacelle selon la revendication précédente, dans laquelle le guide comprend une ouverture (34) dans laquelle est introduite la tête de détection du détecteur de sorte à permettre la détection de la cible insérée dans le guide.

4. Nacelle selon l'une quelconque des revendications précédentes, dans laquelle la cible est configurée pour se situer à une distance entre 0 et 5 mm, et de préférence de l'ordre de 5 mm, de la tête de détection du détecteur, lorsque la cible est insérée dans le guide.

5. Nacelle selon l'une quelconque des revendications précédentes, le capteur étant un capteur magnétique.

6. Nacelle selon la revendication précédente, dans laquelle la cible comporte au moins une partie en matériau métallique magnétique tel que l'inox magnétique, ou l'acier inoxydable martensitique et plus particulièrement le 15-5 PH, ladite partie étant configurée pour être dans la plage de détection du détecteur lorsque la cible est insérée dans le guide, et le guide est en matériau non magnétique, tel qu'un matériau organique ou en polytétrafluoroéthylène (PTFE).

7. Nacelle selon l'une quelconque des revendications précédentes, dans laquelle la cible est une lame souple.

8. Nacelle selon la revendication précédente, dans laquelle la cible présente une épaisseur (e) de l'ordre de 2 mm.

9. Nacelle selon l'une quelconque des revendications 7 à 8, dans laquelle la cible comporte une portion élastique permettant de lui conférer la souplesse nécessaire à son introduction dans le guide.

10. Nacelle selon l'une quelconque des revendications 7 à 9, dans laquelle le guide présente une rainure (32) dans laquelle la lame est apte à être insérée.

11. Nacelle selon la revendication précédente, dans laquelle la rainure présente des bords d'attaques (36) arrondis permettant de guider l'introduction de la lame.

## Patentansprüche

1. Gondel für ein Turbotriebwerk eines Luftfahrzeugs, wobei die Gondel eine Längsachse (A) aufweist und eine feste Struktur und eine Schubumkehr (10) umfasst, wobei die Schubumkehr Folgendes umfasst:
- eine feste Struktur (12), und
- mindestens eine Klappe (14), die um eine Querachse (B) zur Längsachse der Gondel zwischen einer Schließposition, in der sie bei einem Betrieb der Gondel in dem Direktstrahl für eine aerodynamische Kontinuität mit der festen Struktur der Gondel sorgt, und einer Öffnungsposition drehbeweglich ist, in der sie einen Durchgang öffnet, der für die Zirkulation eines umgeleiteten Sekundärluftstroms bei einem Betrieb der Gondel in dem Umkehrstrahl bestimmt ist, wobei die Gondel mindestens einen Positionssensor (18) für die Klappe (14) der Schubumkehr (10) umfasst, wobei der Sensor (18) Folgendes beinhaltet:
- ein Ziel (26), das dazu bestimmt ist, erkannt zu werden;
- einen Detektor (24), der einen Detektionsbereich aufweist und einen Detektionskopf (30) beinhaltet, der konfiguriert ist, um das Ziel zu erkennen, wenn es in seinen Detektionsbereich eintritt; und
- eine Führung (28) des Ziels, die konfiguriert ist, um das Ziel zu führen, um es in dem Detektionsbereich des Detektors zu positionieren,
wobei der Detektor ist in Bezug auf die Führung des Ziels fix ist,
wobei die Gondel ein Verriegelungssystem (20, 22) der Klappe in Schließposition beinhaltet, das einen an der Klappe angeordneten Klappenhaken (20) umfasst, der dazu bestimmt ist, mit einem festen Haken (22) zusammenzuwirken, der an der festen Struktur der Schubumkehr angeordnet ist, wobei das Ziel an dem Klappenhaken befestigt ist und der Detektor und die Führung an der festen Struktur der Schubumkehr montiert sind.

2. Gondel nach dem vorstehenden Anspruch, wobei der Detektor an der Führung des Ziels montiert ist.

3. Gondel nach dem vorstehenden Anspruch, wobei die Führung eine Öffnung (34) umfasst, in die der Detektionskopf des Detektors eingeführt wird, um die Detektion des in die Führung eingeführten Ziels zu ermöglichen.

4. Gondel nach einem der vorstehenden Ansprüche, wobei das Ziel konfiguriert ist, um sich in einem Abstand zwischen 0 und 5 mm, und vorzugsweise in der Größenordnung von 5 mm, von dem Detektionskopf des Detektors zu befinden, wenn das Ziel in die Führung eingeführt wird.

5. Gondel nach einem der vorstehenden Ansprüche, wobei der Sensor ein Magnetsensor ist.

6. Gondel nach dem vorstehenden Anspruch, wobei das Ziel mindestens einen Teil aus magnetischem Metallwerkstoff wie magnetischem Edelstahl oder martensitischem Edelstahl und insbesondere 15-5 PH beinhaltet, wobei der Teil konfiguriert ist, um sich in dem Detektionsbereich des Detektors zu befinden, wenn das Ziel in die Führung eingeführt wird, und die Führung aus nicht magnetischem Werkstoff, wie organischem Werkstoff oder aus Polytetrafluorethylen (PTFE) besteht.

7. Gondel nach einem der vorstehenden Ansprüche, wobei das Ziel eine flexible Klinge ist.

8. Gondel nach dem vorstehenden Anspruch, wobei das Ziel eine Dicke (e) in der Größenordnung von 2 mm aufweist.

9. Gondel nach einem der Ansprüche 7 bis 8, wobei das Ziel einen elastischen Abschnitt beinhaltet, der es ermöglicht, ihm die für sein Einführen in die Führung erforderliche Flexibilität zu verleihen.

10. Gondel nach einem der Ansprüche 7 bis 9, wobei die Führung eine Nut (32) aufweist, in welche die Klinge imstande ist, eingesetzt zu werden.

11. Gondel nach dem vorstehenden Anspruch, wobei die Nut abgerundete Vorderkanten (36) aufweist, die es ermöglichen, das Einführen der Klinge zu führen.

## Claims

1. A Nacelle for an aircraft turbojet engine, the nacelle having a longitudinal axis (A) and comprising a fixed structure and a thrust reverser (10), the thrust reverser comprising:
- a fixed structure (12), and
- at least one door (14), movable in rotation about an axis (B) transverse to the longitudinal axis of the nacelle, between a closed position in which it ensures aerodynamic continuity with the fixed structure of the nacelle during operation of the nacelle in direct jet and an open position in which it opens a passage intended for the circulation of a secondary air flow diverted during operation of the nacelle in reverse jet, said nacelle comprising at least one position sensor (18) of the door (14) of the thrust reverser (10), the sensor (18) including:
- a target (26) intended to be detected;
- a detector (24) having a detection range and including a detection head (30) configured to detect the target when it enters its detection range; and
- a target guide (28) configured to guide the target in position within the detection range of the detector,
the detector being fixed with respect to the target guide.
the nacelle including a locking system (20, 22) of the door in the closed position comprising a door hook (20) disposed on the door, intended to cooperate with a fixed hook (22) disposed on the fixed structure of the thrust reverser, the target being fastened on the door hook, and the detector and the guide being mounted on the fixed structure of the thrust reverser.

2. The nacelle according to the preceding claim, wherein the detector is mounted on the target guide.

3. The nacelle according to the preceding claim, wherein the guide comprises an opening (34) into which the detection head of the detector is introduced so as to enable the detection of the target inserted into the guide.

4. The nacelle according to any one of the preceding claims, wherein the target is configured to be located at a distance between 0 and 5 mm, and preferably about 5 mm, from the detection head of the detector, when the target is inserted into the guide.

5. The nacelle according to any one of the preceding claims, the sensor being a magnetic sensor.

6. The nacelle according to the preceding claim, wherein the target includes at least one portion made of a magnetic metallic material such as magnetic stainless steel, or martensitic stainless steel and more particularly 15-5 PH, said portion being configured to be within the detection range of the detector when the target is inserted into the guide, and the guide is made of a non-magnetic material, such as an organic material or polytetrafluoroethylene (PTFE).

7. The nacelle according to any one of the preceding claims, wherein the target is a flexible blade.

8. The nacelle according to the preceding claim, wherein the target has a thickness (e) of about 2 mm.

9. The nacelle according to any one of claims 7 to 8, wherein the target includes an elastic portion allowing to give it the necessary flexibility to be inserted into the guide.

10. The nacelle according to any one of claims 7 to 9, wherein the guide has a groove (32) in which the blade is adapted to be inserted.

11. The nacelle according to the preceding claim, wherein the groove has rounded leading edges (36) allowing guiding the introduction of the blade.
